# EUROPEAN PATENT SPECIFICATION

(11) **EP 3 257 293 B1**
(45) Date of publication and mention of the grant of the patent: **29.01.2020**
(21) Application number: 16749828.6
(22) Date of filing: 10.02.2016
(51) Int. Cl.: H04W 28/14, H04W 88/08, H04W 12/08, H04W 84/12, H04L 29/08

(54) **PRE-CACHING ON WIRELESS ACCESS POINT**
VORZWISCHENSPEICHERUNG AUF DRAHTLOSEM ZUGANGSPUNKT
PRÉ-MISE EN CACHE SUR UN POINT D'ACCÈS SANS FIL

(30) Priority: 12.02.2015 US 201514621323
(43) Date of publication of application: 20.12.2017
(73) Proprietor: Google LLC, Mountain View, CA 94043 (US)
(72) Inventor: COVELL, Paul Allan, Mountain View, CA 94043 (US); HUANG, Jonathan, Mountain View, CA 94043 (US)
(74) Representative: Maikowski & Ninnemann Patentanwälte Partnerschaft mbB
(86) International application number: PCT/US2016/017406
(87) International publication number: WO 2016/130715

(56) References cited:
- WO-A1-2010/060438
- US-A1- 2004 073 867
- US-A1- 2007 050 491
- US-A1- 2007 089 110
- US-A1- 2007 089 110
- US-A1- 2014 089 594
- US-B2- 7 171 687

## Description

### BACKGROUND

The present disclosure generally relates to computer networks and, in particular, to pre-caching online content for users on wireless local area networks.

A wireless local area network (WLAN) allows a client device to access network resources by establishing a wireless connection to the WLAN through an access point (AP). While connected to the WLAN, the user through a client device may access online content on the Internet. However, latency in accessing online content (e.g., web page, image file, video file, audio file) can negatively impact users' experiences with online services.

WO 2010/060438A1 (ERICSSON TELEFON AB L M [SE]; SAROS JAKOB [SE]; ARNGREN TOMMY [SE]; KR, 2010-06-03) teaches techniques for controlling a pre-fetching of data in a mobile communications environment, wherein more specifically the invention relates to controlling a pre-fetching of data items into a cache associated with a mobile terminal. A method embodiment of the invention is performed by a cache management server and comprises the steps of receiving a pre-fetching request for data items, wherein the pre-fetching request comprises a first user identification associated with the mobile terminal; obtaining, based on the first user identification, one or more second user identifications from a community database of a social network; selecting items for the pre-fetching based on the second user identifications; and providing the selected items in response to the pre-fetching request.

### SUMMARY

The present invention is defined by the independent claims. Further detailed embodiments are defined by the dependent claims.

### BRIEF DESCRIPTION OF THE DRAWINGS

Certain features of the subject technology are set forth in the appended claims. However, for purpose of explanation, several implementations of the subject technology are set forth in the following figures.
FIG. 1 illustrates an example network environment in which pre-caching online content is managed according to aspects of the subject technology.
FIG. 2 illustrates an example server, wireless client device and a wireless network access device and network according to aspects of the subject technology.
FIG. 3 illustrates a pre-cache memory environment according to aspects of the subject technology.
FIG. 4 is a flow chart illustrating a process of a communication process between a server, a wireless network access device and a wireless client device, according to aspects of the subject technology.
FIG. 5 is a flow chart illustrating an example for pre-caching online content at a wireless network access device according to aspects of the subject technology.
FIG. 6 is a flow chart illustrating an example for pre-caching online content at a server according to aspects of the subject technology.
FIG. 7 conceptually illustrates an electronic system with which some implementations of the subject technology may be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced without these specific details. In some instances, structures and components are shown in block diagram form in order to avoid obscuring the concepts of the subject technology.

As noted above, latency in accessing online content (e.g., web page, image file, video file, audio file) can negatively impact users' experiences with online services. Pre-caching online content on or near a client device requesting access to the online content provides a mechanism to reduce this latency. However, cache storage limitations combined with the difficulty in predicting online content to pre-cache can result in cache hit rates that have little to no impact on latency.

The subject technology leverages a wireless local area network (WLAN) that utilizes a user's cloud-based identity to authenticate and associate the user's wireless client device with the WLAN to pre-cache online content on a wireless network access device for the user. Unlike conventional WLANs in which only a hardware address (e.g., MAC address, IP address) is associated with the user's wireless client device, the user's cloud-based identity or user account is associated with the user's wireless client device connected to the WLAN. Upon connecting to the WLAN, the subject technology may use the user's cloud-based identity to determine user information associated with the user's cloud-based identity to predict online content anticipated to be accessed by the user and pre-cache that online content in a cache memory on a wireless network access device in the WLAN. For example, the user may authorize the access of browser histories, content subscriptions, media lists, etc. stored in association with the user's cloud-based identity for purposes of predicting online content for pre-caching. Similar information of contacts, such as social network contacts, associated with the user's cloud-based identity, also may be used to predict and pre-cache online content with authorization by those contacts. Information on internet traffic patterns in general may also be used for the purpose of predicting online content for pre-caching. The subject technology allows for improved pre-caching of online content based on the cloud-based identify of a user of a wireless client device, thereby enabling different pre-caching results for different users of the same wireless client device.

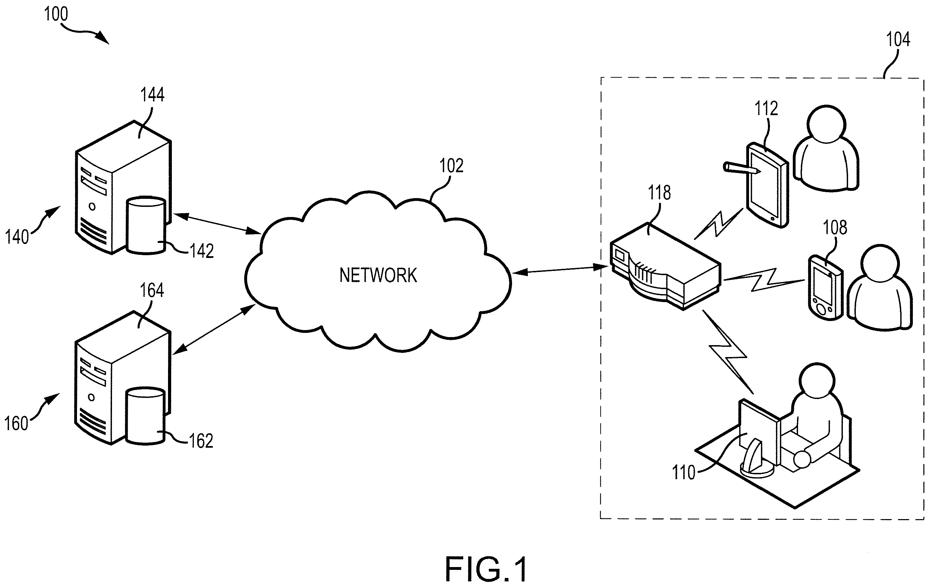

FIG. 1 illustrates an example network environment 100 in which pre-caching online content is managed based on user account credentials of a cloud-based service. Network environment 100 includes wireless local network area 104, network 102, and servers 140 and 160. Wireless local network area 104 may include client devices 108-112, and wireless network access device 118. Servers 140 and 160 may include computing devices 144 and 164 and data stores 142 and 162. The wireless network access device 118 directs communication between client devices 108-112 and network 102.

Each of client devices 108-112 may represent various forms of computing/processing devices. By way of example and without limitation, computing/processing devices can include a desktop computer, a laptop computer, a handheld computer, a personal digital assistant (PDA), a cellular telephone, a network appliance, a camera, a smart phone, an enhanced general packet radio service (EGPRS) mobile phone, a media player, a navigation device, an email device, a game console, or a combination of any of these computing/processing devices or other computing/processing devices.

As depicted in FIG. 1, the client devices 108-112 connect and communicate with the wireless network access device 118 using wireless links. These wireless links may be established and managed using various protocols including the IEEE 802.11 protocols. The client devices 108-112 may communicate wirelessly through a communication interface (not shown), which may include digital signal processing circuitry. In addition to the IEEE 802.11 protocols, the communication interface may provide for communications under other modes or protocols such as, for example, Global System for Mobile communication (GSM) voice calls, Short Message Service (SMS), Enhanced Messaging Service (EMS) or Multimedia Messaging Service (MMS) messaging, Code Division Multiple Access (CDMA), Time Division Multiple Access (TDMA), Personal Digital Cellular (PDC), Wideband Code Division Multiple Access (WCDMA), CDMA2000, or General Packet Radio System (GPRS), among others.

According to aspects of the subject technology, client devices 108-112 may request to be linked to the wireless local area network 104 based on the user's credentials for a cloud-based service provided by server 140, for example. The user's credentials may be included in an authentication request received by the wireless network access device 118 from the client devices 108-112. The wireless network access device 118 may pass the user's credentials to the server 140 for authentication and receive an authentication response from the server 140. The wireless network access device 118 may then configure a wireless link between the wireless network access device 118 and one of the client devices 108-112 that sent the authentication request upon association of the client device with the wireless network access device 118.

Wireless local area network 104 can include, but is not limited to, a computer network that covers a limited geographic area (e.g., a home, school, computer laboratory, or office building) using a wireless distribution method (e.g., spread-spectrum or OFDM). Client devices 108-112 may associate with wireless network access device 118 to access wireless local area network 104 using WiFi standards (e.g., IEEE 802.11). Wireless network access device 118 may include other network components in addition to a wireless network access device. For example, wireless network access device 118 may include a router, switch, bridge, broadband modem etc. According to aspects of the subject technology, wireless network access device 118 is a wireless router that provides both network access device functionality and network routing functionality.

In some aspects, network environment 100 can be a distributed client/server system that spans one or more networks such as, for example, network 102. Network 102 can be a large computer network such as, for example, wide area network (WAN), the Internet, a cellular network, or a combination thereof connecting any number of mobile clients, fixed clients, and servers. Further, the network 102 can include, but is not limited to, any of the following network topologies, including a bus network, a star network, a ring network, a mesh network, a star-bus network, tree or hierarchical network, and the like. In some aspects, communication between client devices 108-112 and servers 140 and 160 can occur via a transport layer security (TLS), secure sockets layer (SSL), or other secure network connection protocols. In some aspects, network 102 may further include a corporate network (e.g., intranet) and one or more wireless network access devices.

Server 140 may be any system or device having a processor, a memory, and communications capability for providing content and/or services to the client devices 108-112, for example. In some example aspects, the server 140 can include a single computing device 144, for example, or can include more than one computing device working together to perform the actions of a server (e.g., cloud computing, server farm). Further, the server 140 can represent various forms of servers including, but not limited to, a web server, an application server, a proxy server, an authentication server, a content server, etc.

Similarly, server 160 may be any system or device having a processor, a memory, and communications capability for providing content and/or services to the client devices 108-112, for example. In some example aspects, the server 160 can be a single computing device 164, for example, or can include more than one computing device working together to perform the actions of a server (e.g., cloud computing, server farm). Further, the server 160 can represent various forms of servers including, but not limited to, a web server, an application server, a proxy server, an authentication server, a content server, etc.

A cloud-based service may include services provided by one or more servers, such as server 140 and server 160, via one or more networks, such as network 102. Cloud-based services may require authentication of user account credentials for access via a cloud-based application, such as a web-based personal portal, a web-based email application, etc. Cloud-based services may include, but are not limited to, electronic messaging services, collaboration services, search services, calendaring services, mapping/navigation services, etc.

A cloud-based service also may include social networking services. A social networking service may enable users to create a profile and associate with other users of the social networking service. For example, a user of a social networking service may have different groups of friends, coworkers, and family, and there may be some overlap among those groups (e.g., a coworker who is also considered to be a friend, a family member who is also a coworker). A social networking service may allow users to share content and messages with other users of the social networking service.

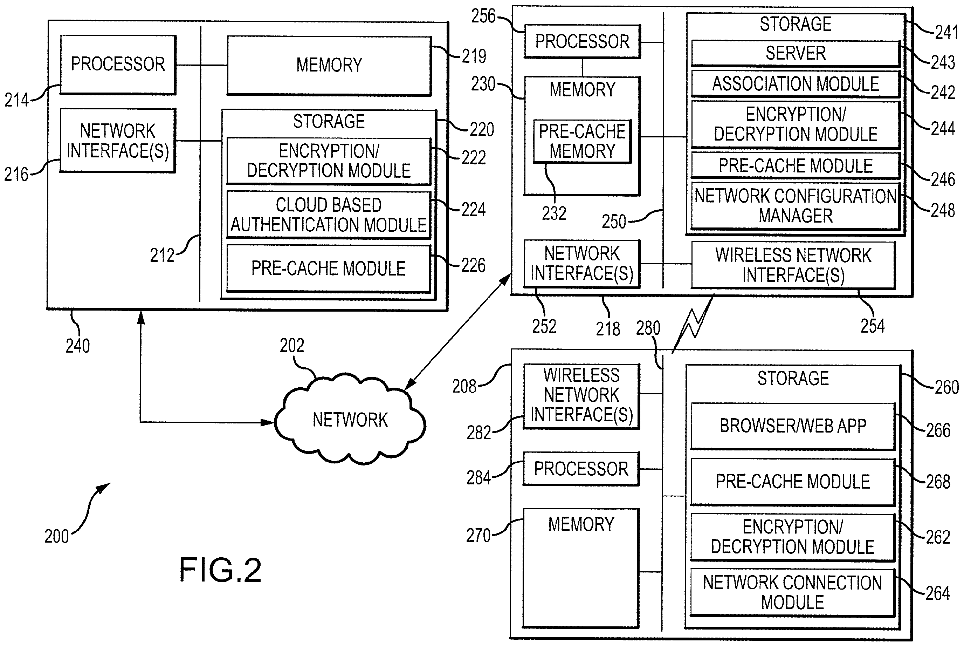

FIG. 2 illustrates an example server 240, wireless client device 208, wireless network access device 218 and network 202, similar to the server 140, client device 108, wireless network access device 118 and network 102 of FIG. 1, respectively, according to aspects of the subject technology. Not all of the components depicted in the figure may be used, however, and one or more implementations may include additional components not shown in the figure. Variations in the arrangement and type of the components may be made without departing from the scope of the subject technology. Additional components, different components, or fewer components may be provided.

Server 240 includes processor 214, memory 219, storage 220, bus 212 and one or more network interfaces 216. Bus 212 collectively represents system, peripheral, and chipset buses that communicatively connect components of server 240. For instance, bus 212 communicatively connects processor 214, memory 219, storage 220 and network interface 216.

Memory 219 may include a dynamic random-access memory (DRAM) and/or a read-only memory (ROM). Memory 219 may provide a temporary location to store data and instructions retrieved and processed by processor 214. Storage 220 may include a non-volatile read-and-write memory that stores data and instructions retrieved and processed by processor 214. For example, storage 220 may include magnetic, solid-state and/or optical media.

Processor 214 may retrieve and execute instructions from memory 219 and/or storage 220, in order to perform the processes of the subject disclosure. Processor 214 can be a single processor, a multi-core processor, or multiple processors in different implementations. Encryption/decryption module 222, cloud-based authentication module 224, and pre-cache module 226 stored in storage 220 may include one or more sets of instructions that, when executed by processor 214, cause processor 214 to perform operations described herein.

Cloud-based authentication module 224 may be configured to receive and authenticate user account credentials for a cloud-based service, for example, to grant access to the wireless network. Based on the authentication results, authentication module 224 may provide an authentication response to a wireless network access device from which the user account credentials were forwarded in order to complete the association process and establish a wireless link with a wireless client device on which a user has signed in using the user account credentials. In addition, the cloud-based authentication module 224 may be configured to notify a pre-cache module on the same server or on another server, such as a content server, web server or an application server, about the authenticated user account used to associate a wireless client device associated with the user account with the wireless network. In this manner, servers are made aware of user accounts for which the pre-caching mechanisms described herein may be applied.

Pre-cache module 226 may include instructions to identify anticipated online content for the user account associated with the authenticated user account credentials. Pre-cache module 226 may identify the anticipated online content for the user account based on historical access data and other information associated with the user account. The historical access data and other information may include Internet browsing history, social network activity, email history, calendar entries, online content subscription information, etc. In addition to historical access data and other information associated with a specific user account, pre-cache module 226 may use historical access data and other information for groups of user accounts associated with the user account (e.g., social network contacts, users in a common geographical region, etc.) or Internet traffic data in general to identify anticipated online content for the user account.

Pre-cache module 226 may include instructions to send a pre-cache notification of the identified online content anticipated to be requested from a user account to wireless network access device 218. The pre-cache notification may include an identifier for the anticipated online content (content ID) and a location where the anticipated online content may be found. The content ID and location may comprise a uniform resource locator (URL) or other types of address, network path information.

Pre-cache module 226 also may include instructions for pushing the anticipated online content to the wireless network access device 218 via an application program interface (API) configured on the wireless network access device. For example, rather than sending a pre-cache notification with a content ID and location, pre-cache module 226 may push the anticipated online content directly to the pre-cache memory 232 of wireless network access device 218. In this configuration, pre-cache module 226 also notifies wireless network access device 218 about the pushed anticipated online content and the user account or user accounts for which the online content is anticipated for management of the anticipated online content within the pre-cache memory 232.

Pre-cache module 226 may include instructions to track online content which has been pre-cached on the wireless network access device and the user account(s) for which the online content has been pre-cached. Pre-cache module 226 may compare content requests received by the server and the sources of the content requests to determine if the requested online content has been pre-cached. When a content request is received from a client device associated with a user account for which the online content has been pre-cached, pre-cache module 226 may be configured to generate a response message with a content ID and location information indicating the presence of the requested online content on wireless network access device 218.

Encryption/decryption module 222 may include instructions to perform encryption and/or decryption of transmissions to/from server 240. Encryption/decryption module 222 may include instructions to encrypt the authentication response and the online content, for example, using one or more cryptographic keys.

Wireless network access device 218 includes processor 256, memory 230, network interface 252, wireless network interface 254, bus 250 and storage 241. Wireless network access device 218 may establish a network connection with wireless client device 208 via wireless network interfaces 254. Bus 250 collectively represents system, peripheral, and chipset buses that communicatively connect the components of wireless network access device 218. For instance, bus 250 communicatively connects processor 256, memory 230, storage 241, wireless network interfaces 254 and network interface 252.

Memory 230 may include a dynamic random-access memory (DRAM) and/or a read-only memory (ROM). Memory 230 may provide a temporary location to store data and instructions retrieved and processed by processor 256. Storage 241 may include a non-volatile read-and-write memory that stores data and instructions that may be retrieved and processed by processor 256. For example, storage 241 may include magnetic, solid-state or optical media.

Processor 256 may retrieve and execute instructions from memory 230 and/or storage 240, in order to perform the processes of the subject disclosure. Processor 256 can be a single processor, a multi-core processor, or multiple processors in different implementations. Association module 242, server 243, encryption/decryption module 244, pre-cache module 246 and network configuration manager 248 stored in storage 241 may include instructions that, when executed by processor 256, cause processor 256 to perform operations described herein.

Association module 242 may be configured to manage the process of associating wireless client devices with wireless network access device 218. For example, association module 242 may broadcast availability of the wireless network access device 218 in a beacon message and reply to authentication and association requests received from wireless client devices according to connection protocols such as the IEEE 802.11 protocols and variations described herein. In response to authentication requests from wireless client devices, association module 242 may forward the authentication request to a server of a cloud-based service, such as server 240, to authenticate the user account credentials of the wireless client device user account.

Upon authentication by the server 240, the association module 242 may receive an authentication response associated with the user account. Subsequently, according to the received response from the server 240 to the authentication request, network configuration manager 248 configures a wireless link between the wireless network access device 218 and the wireless client device 208 based on the user account credentials.

Encryption/decryption module 244 may include instructions to perform encryption and/or decryption of transmissions to/from the wireless network access device 218. Encryption/decryption module 244 may include instructions to encrypt the authentication request, for example, using one or more cryptographic keys stored in the memory 219. Wireless client device 208 may provide the encrypted authentication request to server 240, e.g., via wireless network access device 218 and network 202.

Pre-cache module 246 may include instructions to receive pre-cache notifications and send requests for the anticipated online content identified in the received pre-cache notifications. Upon receipt of the anticipated online content, pre-cache module 246 may be configured to store the anticipated online content in the pre-cache memory 232 on the wireless network access device 218 and update cache management information to reflect the pre-caching of the anticipated online content. Pre-cache module 246 may receive pre-cache notifications for one or more user accounts signed in on wireless client devices associated with wireless network access device 218. Pre-cache module 246 may prioritize handling of the received pre-cache notifications based on time or receipt, source of anticipated online content, user status (e.g., network owner), user relationships (e.g., relative to network owner), etc.

Pre-cache module 246 on wireless network access device 218 also may be configured to identify online content anticipated to be requested from user accounts signed in on wireless client devices associated with wireless network access device 218. Pre-cache module 246 may identify the anticipated online content for these user accounts based on historical access data and other information associated with the user accounts' network activity via wireless network access device 218. For example, the historical access data and other information may include Internet browsing history, online content delivery, etc. for individual user accounts as well as groups of user accounts.

Server module 243 may include instructions to operate wireless network access device 218 as a server such as a transparent proxy server. In this regard, server module 243 may be configured to intercept online content request messages (e.g., HTTP requests) from wireless client devices associated with wireless network access device 218 and compare the requested online content against the anticipated online content stored in the pre-cache memory 232 of wireless network access device 218. If there is a cache hit, server module 243 returns the matching online content from pre-cache memory 232 to the requested wireless client device. If no match is found in pre-cache memory 232, server module 243 routes the request for the online content to the originally intended content server.

Server module 243 also may include instructions to operate wireless network access device 218 as a local server. In this regard, server module 243 may be configured to respond to online content request messages (e.g., HTTP requests) addressed directly to wireless network access device 243. Upon receipt of an online content request message, server module 243 services the request with the anticipated online content stored in pre-cache memory 232. Server module 243 may include instructions to run wireless network access device 218 as an HTTP/Socket secure (SOCKS) proxy server, where a SOCKS proxy server is a proxy server that allows user authentication for an added layer of security.

Network configuration manager 248 may be configured to configure wireless links and access to resources of the wireless local area network according to user account credentials of users signed in on wireless client devices seeking to access the wireless local area network. The specific configurations may be managed by the network configuration manager 248 or the network configuration manager 248 may send specific parameters to modules and/or computing devices for which the configuration parameters apply.

Wireless client device 208 includes processor 284, one or more wireless network interfaces 282, storage system 260, bus 280 and memory system 270. Bus 280 collectively represents system, peripheral, and chipset buses that communicatively connect the components of wireless client device 208. For instance, bus 280 communicatively connects processor 284, memory 270, storage 260 and network interfaces 282.

Memory 270 may include a dynamic random-access memory (DRAM) and/or a read-only memory (ROM). Memory 270 may provide a temporary location to store data and instructions that may be retrieved and processed by processor 284. Storage 260 may include a non-volatile read-and-write memory that stores data and instructions that may be retrieved and processed by the processor 284. For example, storage 260 may include magnetic, solid-state or optical media.

Processor 284 may retrieve and execute instructions from memory 270 and/or storage 260, in order to perform the processes of the subject disclosure. Processor 284 can be a single processor, a multi-core processor, or multiple processors in different implementations.

Network connection module 264 may be configured to manage the discovery of wireless local area networks and the association process between the wireless client device 208 and the discovered wireless local area networks. Upon discovery of a wireless network access device that supports an authentication protocol with a cloud-based service as described herein, the network connection module 264 may send an authentication request to the discovered wireless network access device, such as wireless network access device 218. User account credentials also may be stored in storage 260. Upon authentication by the server associated with the cloud-based service, such as server 240, the network connection module 264 may be configured to complete the association process with the wireless network access device to establish a wireless link configured according to the user account credentials.

Encryption/decryption module 262 may include instructions to perform encryption and/or decryption of transmissions to/from the wireless client device 208. Encryption/decryption module 262 may include instructions to encrypt the authentication request, for example, using one or more cryptographic keys stored in the memory 270.

Browser/web application module 268 may be configured to provide a user interface on wireless client device 208 for a user to request and render online content such as web pages, video files, audio files, image files, etc. Browser/web application module 268 may be configured to provide a navigation interface to enable a user to enter a location of desired online content (e.g., URL) for the module to use in requesting the online content from a content server. Browser/web application module 268 may be configured to provide other types of user interface elements for a user to interact with to access desired online content.

Pre-cache module 268 may include instructions to identify online content anticipated to be requested from an authenticated online account user signed in on wireless client device 208. Pre-cache module 268 may identify the anticipated online content for the user account based on historical access data and other information maintained on wireless client device 208. The historical access data and other information may include Internet browsing history, online content subscription information, etc. Pre-cache module 268 may include instructions to generate and send pre-cache notifications for the identified anticipated online content to pre-cache module 246 of wireless network access device 218

In situations in which the systems and processes discussed herein collect or make use of personal information about users and their user accounts, the users are provided with control to whether and/or to what extent the programs or features collect and make use of such user information, or to control whether and/or how to receive content that may be more relevant to the user. In addition, where personal information about the user is stored and/or shared with one or more other users, various privacy controls may be employed to facilitate protecting the storing and/or sharing of such content, such as the user may be provided with an opportunity to limit the visibility of the personal information to one or more of the users.

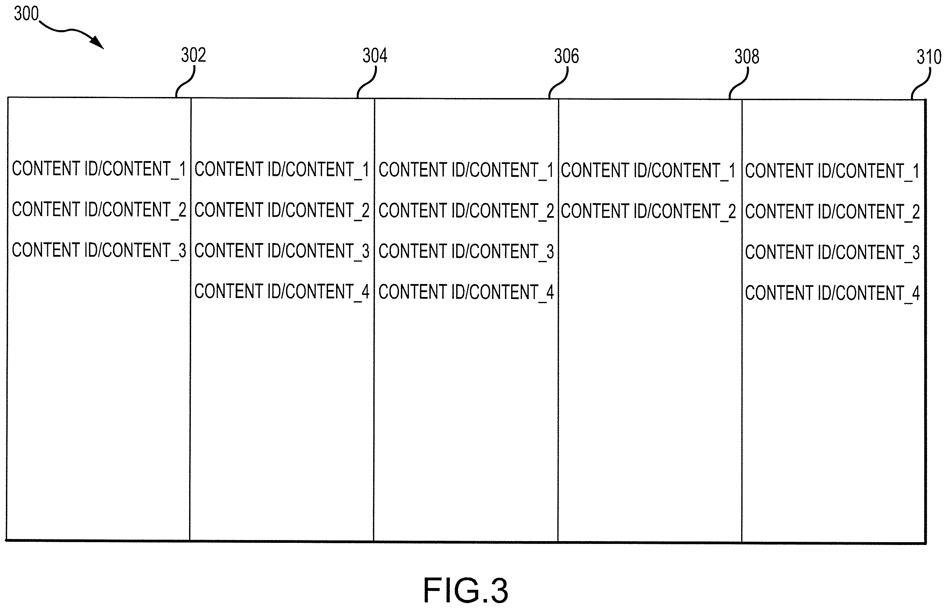

FIG. 3 illustrates pre-cache memory 300 on wireless network access device 218 according to aspects of the subject technology. Pre-cache memory 300 may be divided into a number of pre-cache partitions 302-310. Each of pre-cache partitions 302-130 may be assigned to a single user account associated with a wireless client device linked to wireless network access device 218 or a group of such user accounts. The number and size of the pre-cache partitions may be based on the total size of pre-cache memory 300 and an amount of memory space allocated to each of the user accounts or groups of user accounts. The sizes of the different pre-cache partitions may be the same or may vary from one another.

Each pre-cache partition 302-310 may include one or more anticipated online content items having an identifier, such as the URL of the origin of the online content or some other identifier used to determine cache hits. As noted above, pre-cache partitions 302-310 may be assigned to particular user accounts or groups of user accounts. In this arrangement, online content requests from wireless client devices are checked against only the partitions assigned to user accounts associated with requesting wireless client devices for cache hits. In some configurations, one or more partitions or the pre-cache memory as a whole may be available for pre-caching online content for all user accounts with wireless client devices linked to the wireless network access device. In this regard, all online content requests received from wireless client devices are checked against the pre-cached online content in the pre-cache memory for cache hits.

Pre-cache partitions may be maintained and managed as long as the wireless client device on which the user account is signed in on is still associated with wireless network access device 218. When a wireless client device disconnects from wireless network access device 218, the pre-cache partition assigned to the associated user account may be emptied or maintained for a predetermined period of time following the disconnection of the wireless client device. While the connection between the wireless client device and wireless network access device 218 is maintained, various cache-management algorithms may be used to manage the anticipated online content pre-cached in the partition. The cache-management algorithms may use time from pre-caching, elapsed time since last cache hit, preferred types of cached online content, first-in-first-out, etc. in determining when and what anticipated online content should be purged from the pre-cache partition if the pre-cache partition is full and additional pre-cache notifications are received for the assigned user account.

The cache-management algorithms may take into account relationships between the different user accounts signed in on wireless access devices linked to wireless network access device 218. For example, a pre-cache partition assigned to the user account of an owner of the wireless network may be given priority for populating the pre-cache partition, delaying emptying the pre-cache partition, size allocation for the pre-cache partition, etc. over other user accounts. Similarly, user accounts with social/family associations with the network owner may be given similar priority treatment over other user accounts or general guest user accounts.

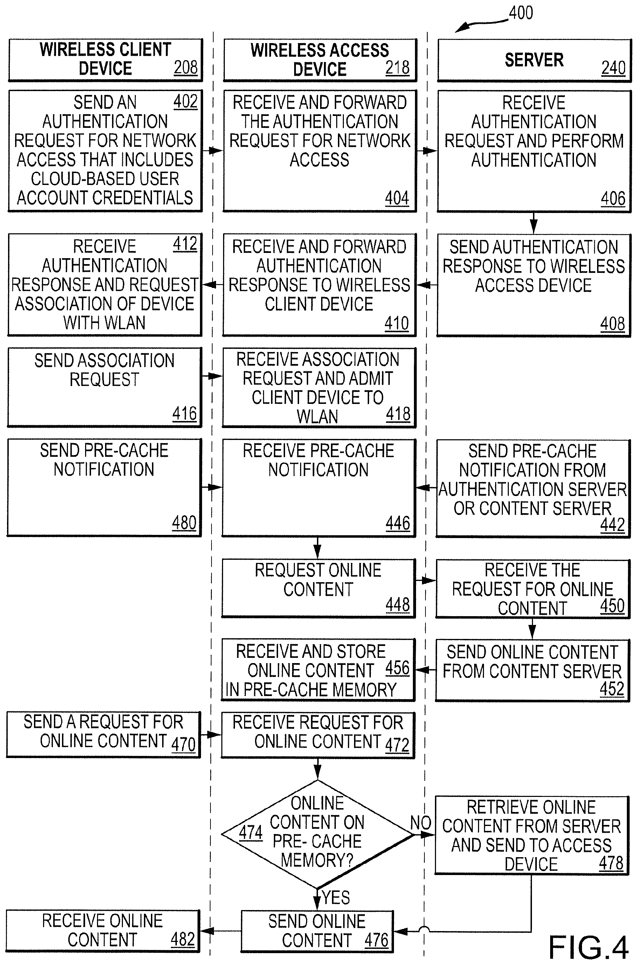

FIG. 4 is a flow chart illustrating a communication process 400 between a server 240, a wireless network access device 218 and a wireless client device 208, according to aspects of the subject technology. For explanatory purposes, the blocks of the example process 400 are described herein as occurring in serial, or linearly. However, multiple blocks of the example process 400 may occur in parallel. In addition, the blocks of the example process 400 may be performed a different order than the order shown and/or one or more of the blocks of the example process 400 may not be performed.

The communication process 400 includes requesting access by the wireless client device 208 to the WLAN by authenticating the user account signed in on and associated with the wireless client device 208. The authentication process may be based on cloud-based user account credentials for example, and performed by an authentication server. Furthermore, the communication process 400 includes receiving online content anticipated to be requested or accessed from an authenticated user account in response to a pre-cache notification from a server and passing the online content to the wireless client device 208 upon request. The pre-cache notification may be initiated by a server, a wireless network access device 218 or a wireless client device 208.

In block 402, wireless client device 208 sends an authentication request for accessing the wireless local area network to wireless network access device 218. The authentication request may be configured according to an extensible authentication protocol for a cloud-based service authentication and include credentials for a user account of the cloud-based service. The credentials may be temporarily stored on the wireless client device 208 when the user logs in on the wireless client device 208 or to an application associated with the cloud-based service. This temporary storage may be contingent on the user authorizing the storage and use of the credentials in the settings of the wireless client device 208 or the application associated with the cloud-based service. Wireless client device 208 may need to validate a digital certificate (e.g., SSL certificate, X.509 certificate) associated with the cloud-based service to transmit the authentication request securely.

The wireless network access device 218 receives the authentication request including the user account credentials from the wireless client device 208 and forwards the authentication request with the user account credentials to server 240 for authentication in block 404. The wireless network access device 218 may recognize the authentication request received from the wireless client device 208 as being for the cloud-based service provided by server 240 based on the extensible authentication protocol used by the wireless client device 208 to configure and send the authentication request. Extensible authentication protocols for authentication services outside of wireless network access devices are generally known and will not be described in further detail herein. The wireless network access device 218 may transport the authentication request via a secure TLS or SSL tunnel, for example, preventing the actual user account credentials from being exposed to the wireless local area network.

The server 240 receives the authentication request from the wireless network access device 218 and authenticates the user account credentials included with the authentication request in block 406. Upon successful authentication of the user account credentials, the server 240 sends an authentication response to the wireless network access device 218 in block 408. The wireless network access device 218 sends the positive authentication response to the wireless client device 208 in block 410. The wireless client device 208 receives the authentication response from the wireless network access device 218. Once authentication is completed, wireless client device 208 requests association with WLAN, in block 412. The wireless network access device 218 receives the association request and admits the client device 208 to the WLAN in response to the association request.

As noted above, pre-cache modules are notified of authenticated user accounts accessing wireless network access devices that support the pre-caching processes described herein. Pre-cache notifications may be sent to wireless network access device 218 from pre-cache modules on different sources, such as a content server and/or wireless client device 208. In block 442, the server sends the wireless network access device 218 a pre-cache notification for online content anticipated to be requested from an authenticated user account. The pre-cache notification includes a content ID and a content location indicating where the content is stored. Alternatively, in block 480, the pre-cache notification is sent from the wireless client device 208 to the wireless network access device 218.

Upon receiving the pre-cache notification either from a server or wireless client device, in block 446 wireless network access device 218 requests the anticipated online content in block 448 from the content server storing the anticipated online content. Once the content server receives the request for the online content in block 450, the server sends the anticipated online content to the wireless network access device 218. The wireless network access device 218 receives the online content and stores the content in the pre-cache.

In some aspects of the technology, wireless client device 208 sends a request for online content in block 470. The wireless network access device 218 receives the request in block 472. If no secure authentication is required that necessitates a SOCKS server, for example, the wireless network access device 218 may function as a transparent proxy server where the wireless network access device 218 intercepts the request, searches its pre-cache memory for the requested online content in block 474. If there is no match within the wireless network access device pre-cache memory the wireless network access device 218 passes the request for the online content to the content server, where the content server retrieves the requested online content and sends it to the wireless network access device 218 in block 478. The wireless network access device 218 then sends the online content in block 476 to wireless client device which receives the online content in block 482.

In some aspects, if the requested online content in block 470 requires authentication the wireless network access device 218 may function as a SOCKS proxy server, where authentication is added for additional privacy related to the requested online content. Additionally if authentication is requested, the content server generates encrypted online content and sends a unique identifier for the online content to the wireless client device where only the wireless client device may use a decryption key to decrypt the content. This technique provides an added layer of privacy where even the wireless network access device 218 does not know the requested content.

In some aspects of the technology, a content server may push online content anticipated to be requested from a user account to the wireless network access device 218 to store in its pre-cache memory. The anticipated online content may be encrypted and identified with a unique identifier for wireless network access device 218 that does not reveal what the anticipated online content contains. The anticipated online content may be decrypted by a wireless client device having a decryption key coordinated with the content server. This arrangement provides an added layer of privacy where wireless network access device 218 does not know what is contained in the anticipated online content requested by a wireless client device.

In the processes and systems described herein, access to a wireless local area network and the network resources associated with that network are managed and controlled based on user account credentials of a user of a wireless client device rather than a hardware identifier of the wireless client device itself. The use of an online user account to identify pre-cache online content can result in cache hit rates that have higher impact on latency in comparison to predicting online content based on the client device only since user activity across multiple client devices may be considered in identifying online content anticipated to be requested from the user account signed in on a client device. Online content may be requested from a user account by a user via a web browser or other application while signed in to the user account. The user may sign in the user account on the web browser or on another application or operating system.

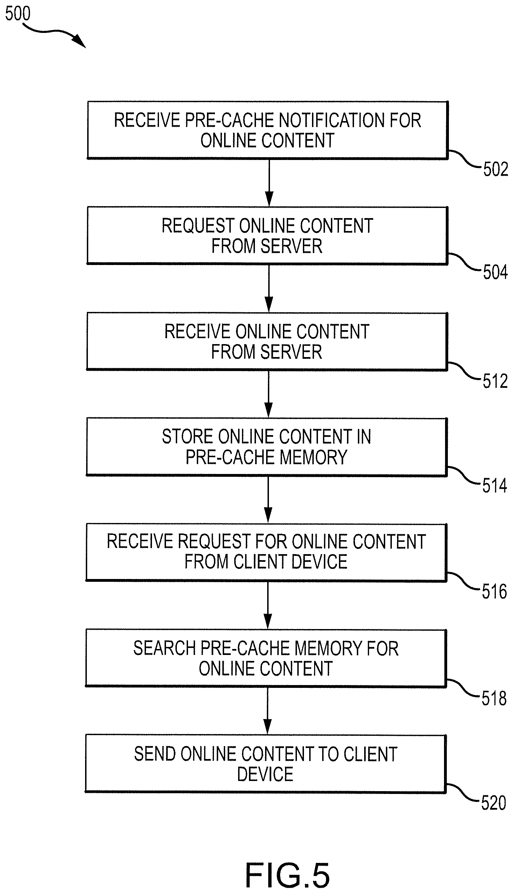

FIG. 5 is a flow chart illustrating an example 500 for pre-caching online content at wire less network access device 218 according to aspects of the subject technology. F or explanatory purposes, the blocks of the example process 500 are described herein as occurring in serial, or linearly. However, multiple blocks of the example process 500 may occur in parallel. In addition, the blocks of the example process 500 may be performed a different order than the order shown and/or one or more of the blocks of the example process 500 may not be performed.

In block 502, the wireless network access device 218 receives a pre-cache notification of online content anticipated to be requested from an authenticated user account. In one or more implementations, the pre-cache notification may be sent from an authentication server, a content server or a client application on the wireless client device 208. The pre-cache notification may be received prior to receiving a request for the online content from the wireless client device 208. For example, a user logged in on the wireless client device 208 using the user account may not yet have navigated to the online content in a browser or other application. The pre-cache notification may include an identifier for the anticipated online content and a location where the anticipated online content is stored on a content server. In block 504, the wireless network access device 218 requests the online content from the content server.

In some aspects, a number of pre-cache notifications associated with multiple user accounts may be received. Wireless network access device 218 may prioritize the anticipated online content requests based on pre-defined protocols. For example, the pre-cache notifications may be prioritized on first-in-first served, or using prioritization rules based on relationships between the different user accounts. For example, a network owner's user account might have higher priority than a guest user account within the network 202.

In some aspects, the anticipated online content may be requested to be sent over a secure connection and/or encrypted. The wireless network access device 218 establishes a secure connection with the content server. The content server provides an encrypted online content and/or sends the online content over the secure connection to the network access device 218. Alternatively, if no request for encryption is initiated the online content will be sent directly to the wireless network access device with no encryption.

The wireless network access device 218 receives the online content from the server and stores the online content in a pre-cache memory in block 514. The pre-cache memory may be partitioned into a number of sections where each section is associated with a user account or with a number of user accounts. If the online content is associated with a number of user accounts and not just an individual user account, the received online content may be stored in a common partition for all user accounts.

In block 516, wireless network access device 218 receives a request for online content from wireless client device 208 linked to wireless network access device 218, where a user account is signed in on the wireless client device. Wireless network access device 218 may be configured as a transparent proxy server or a SOCKS proxy server and intercept the request for online content from the wireless client device 208. Wireless network access device 218 searches pre-cache memory 232 for online content in block 518 that matches the request and is associated with the user account signed in on the wireless client device. If the wireless network access device 218 finds a match within the pre-cache memory then it will pass the online content to the wireless client device. Otherwise, it will pass the request for the online request to the content server for standard processing.

In some aspects, a request for online content from wireless client device 208 may not be intercepted by the wireless network access device 218. For example, wireless network access device 218 may not be configured to operate as a transparent proxy server. The content server in response may send to the wireless client device 208 a response message containing a content ID and a location indicating that the requested online content has been pre-cached on the wireless network access device 218. The content ID and location may be arranged in the header information and the browser/web application on the wireless client device 208 may be configured to check the header for this information. The wireless client device may then send a request to the wireless network access device 218 for the online content. The wireless network access device then searches its pre-cache memory for the requested online content and retrieves the requested online content to pass to the wireless client device.

In one or more implementations, the wireless client device 208 may request the online content to be encrypted and/or sent over a secure connection. If the online content is requested to be encrypted and/or sent over a secure connection. In the event the wireless network access device act as a SOCKS server, the wireless network access device 218 establishes a secure connection with the wireless network access device 208 and/or the content server, and encrypts the online content using encryption/decryption module 244.

In block 520, the wireless network access device 218 sends to the wireless client device 208 the online content, which may be encrypted. If encrypted, the client device 208 decrypts the online content via the encryption/decryption module 262. In one or more implementations, the online content is encrypted by the content server with a key that is unknown to the wireless network access device, thus only the wireless client device is capable of decrypting the online content.

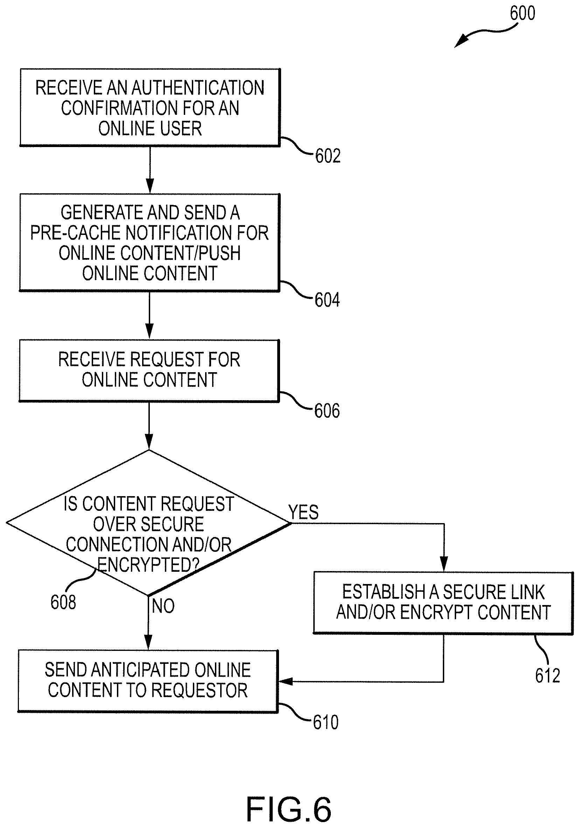

FIG. 6 is a flow chart illustrating an example 600 for pre-caching online content, according to aspects of the subject technology. For explanatory purposes, the blocks of the example process 600 are described herein as occurring in serial, or linearly. However, multiple blocks of the example process 600 may occur in parallel. In addition, the blocks of the example process 600 may be performed a different order than the order shown and/or one or more of the blocks of the example process 600 may not be performed.

In block 602, the server 240 receives an authentication confirmation indicating that a user account associated with a client device 208 has been authenticated for linking the client device 208 to the network. The authentication may be performed by an authentication server using user account credentials of a cloud-based service for example.

In block 604, the server generates and sends a pre-cache notification for online content anticipated to be requested or access from the user account based on historical access data and/or other information associated with the user account. According to some aspects of the technology, the server 240 may push the online content to a cache memory 246 on the network access device 218 as discussed above.

In some aspects of the technology, the server may push anticipated online content related to a user account to the wireless network access device 218 to store in its pre-cache memory. As discussed above, the anticipated online content may be encrypted and identified with a unique identifier for an added layer of privacy where even the wireless network access device 218 does not know the requested content.

In block 606, the browser/web application of the wireless client device 208 may request online content from the server. The server in response to the request for the online content from the wireless client device 208 may send the wireless client device a response to the request containing an ID for the anticipated online content and a location indicating that the online content had been pre-cached on the wireless network access device 218. The wireless client device 208 may start streaming the requested online content from the server and request the anticipated online content from the wireless network access device 218 simultaneously. Once the online content is located on wireless network access device 218 and the wireless client device starts streaming the online content from the wireless network access device, the wireless client device 208 may terminate the communication link with the server and continue streaming from the wireless network access device 218. This technique may provide for a soft handover from the content server to the wireless access point with little to no interruption of the user's experience.

In some aspects, if the wireless network access device 218 may be configured as a transparent proxy server or a SOCKS server. In this arrangement, wireless network access device 218 intercepts the request for the online content from the wireless client device 208 and searches its pre-cache memory 232 for the requested online content in block 606. In the event no match is found for the requested online content by the wireless client device 208, the wireless network access device 218 passes the request for the online content to the content server and awaits the server's response. The interception is transparent to both the wireless network access device and the server in this case.

In some aspects, the client device 208 may request the online content simultaneously from the content server and the wireless network access device 218, based on the first response from either source, the wireless client device drops the second source once the first source is connected and the online content is located.

In block 608, the online content may be requested by the wireless network access device 218 or the wireless client device 208 to be sent over a secure connection and/or encrypted. If the online content is requested to be encrypted and/or sent over a secure connection, the server 240 establishes a secure connection, in block 612, between the server and the wireless network access device 218 or the wireless client device 208, encrypts the online content using encryption/decryption module 244 and sends the encrypted online content over a secure link in block 610. If there is no request for the online content to be encrypted and/or sent over a secure connection, the server send the online content without performing this additional step.

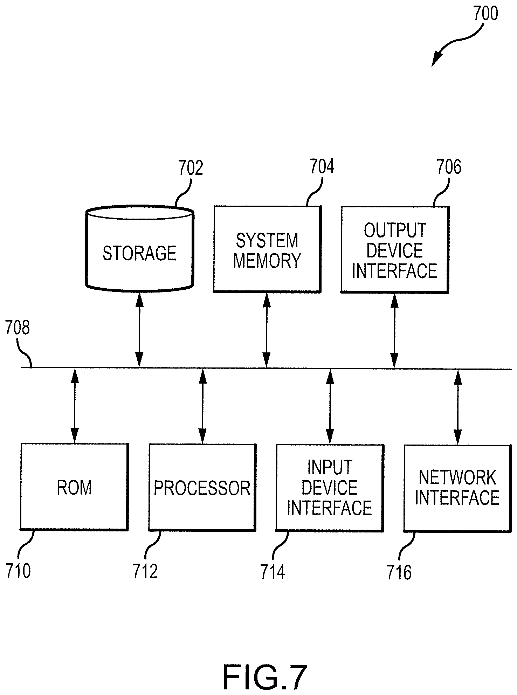

FIG. 7 conceptually illustrates a computing system 700 with which implementations of the subject technology, such as server 140/240 and wireless client device 108/208, may be implemented. Electronic system 700 can be a server, computer, phone, PDA, laptop, tablet computer, television with one or more processors embedded therein or coupled thereto, or any other sort of electronic device. Such an electronic system includes various types of computer readable media and interfaces for various other types of computer readable media. Electronic system 700 includes a bus 708, processor 712, a system memory 704, a read-only memory (ROM) 710, a permanent storage device 702, an input device interface 714, an output device interface 706, and a network interface 716.

Bus 708 collectively represents system, peripheral, and chipset buses that communicatively connect the numerous internal devices of electronic system 700. For instance, bus 708 communicatively connects processor 712 with ROM 710, system memory 704, and permanent storage device 702.

From these various memory units, processor 712 retrieves instructions to execute and data to process in order to execute the processes of the subject disclosure. The processor can be a single processor or a multi-core processor in different implementations.

ROM 710 stores static data and instructions that are needed by processor 712 and other modules of the electronic system. Permanent storage device 702, on the other hand, is a read-and-write memory device. This device is a non-volatile memory unit that stores instructions and data even when electronic system 700 is off. Some implementations of the subject disclosure use a mass-storage device (such as a magnetic or optical disk and its corresponding disk drive) as permanent storage device 702.

Other implementations use a removable storage device (such as a floppy disk, flash drive, and its corresponding disk drive) as permanent storage device 702. Like permanent storage device 702, system memory 704 is a read-and-write memory device. However, unlike storage device 702, system memory 704 is a volatile read-and-write memory, such a random access memory. System memory 704 stores some of the instructions and data that the processor needs at runtime. In some implementations, the processes of the subject disclosure are stored in system memory 704, permanent storage device 702, and/or ROM 710. For example, the various memory units include instructions for network access and resources management according to various implementations. From these various memory units, processor 712 retrieves instructions to execute and data to process in order to execute the processes of some implementations.

Bus 708 also connects to input and output device interfaces 714 and 706. Input device interface 714 enables the user to communicate information and select commands to the electronic system. Input devices used with input device interface 714 include, for example, alphanumeric keyboards and pointing devices (also called "cursor control devices"). Output device interfaces 706 enables, for example, the display of images generated by the electronic system 700. Output devices used with output device interface 706 include, for example, printers and display devices, such as cathode ray tubes (CRT) or liquid crystal displays (LCD). Some implementations include devices such as a touchscreen that functions as both input and output devices.

Finally, as shown in FIG. 7, bus 708 also couples electronic system 700 to a network (not shown) through a network interface 716. In this manner, the computer can be a part of a network of computers (such as a local area network ("LAN"), a wide area network ("WAN"), or an Intranet, or a network of networks, such as the Internet. Any or all components of electronic system 700 can be used in conjunction with the subject disclosure.

These functions described above can be implemented in digital electronic circuitry, in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid-state hard drives, read-only and recordable Blu-Ray® discs, ultra density optical discs, any other optical or magnetic media, and floppy disks. The computer-readable media can store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, such as application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a wireless client device in response to requests received from the web browser.

Implementations of the subject matter described in this specification can be implemented in a server that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The server system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that some illustrated steps may not be performed. Some of the steps may be performed simultaneously. For example, in certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, where reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

The word "exemplary" is used herein to mean "serving as an example or illustration." Any aspect or design described herein as "exemplary" is not necessarily to be construed as preferred or advantageous over other aspects or designs.

## Claims

1. A wireless network access device (218) for a wireless local area network (104), comprising:
a cache memory;
one or more processors; and
a non-transitory, machine-readable medium encoded with instructions which, when executed by the one or more processors, cause the one or more processors to perform operations comprising:
establishing (418) a wireless link between the wireless network access device (218) and a first client device (208) based on authentication by an authentication server (240) of credentials of a first user account received from the first client device (208), wherein the first user account is signed in on the first client device (208);
receiving (446) a plurality of pre-cache notifications, associated with a plurality of user accounts, for online content anticipated to be requested by a plurality of client devices, wherein the plurality of client devices are associated with a plurality of respective user accounts, and wherein the plurality of client devices includes the first client device and the plurality of user accounts includes the first user account;
prioritizing the plurality of received pre-cache notifications associated with user accounts of owners of the wireless network;
requesting (448), based on the prioritization of the plurality of pre-cache notifications, the online content, from a content server (240), for precache notifications associated to the first user account and associating the online content with the first user account;
receiving (456) the requested online content from the content server (240) and storing (456) the requested online content in the cache memory;
receiving (472) a request for the online content from the first client device (208) linked to the wireless network access device (218); and
returning (476) the online content from the cache memory to the first client device (208) when the online content matches the request and the online content is associated with the first user account.

2. The wireless network access device (218) of claim 1,
wherein the first client device (208) is a wireless client device linked to the wireless network access device via the wireless link.

3. The wireless network access device (218) of claim 1, wherein the pre-cache notification is received from the content server (240), a cloud-based service associated with the first user account, or a client application on the first client device (208).

4. The wireless network access device (218) of claim 1, wherein the cache memory is divided into a plurality of partitions,
wherein the requested online content is stored in a partition of the plurality of partitions in the cache memory assigned to the first user account, and
wherein the operations further comprise clearing the partition of the cache memory assigned to the first user account in response to the first client device (208) disconnecting from the wireless network access device (218).

5. The wireless network access device (218) of claim 1, wherein the pre-cache notification comprises an identifier for the anticipated online content and a location of the anticipated online content on the content server (240).

6. The wireless network access device (218) of claim 1, wherein the operations further comprise:
establishing a secure connection between wireless the network access device (218) and the content server (240), wherein the online content is requested and received from the content server (240) via the secure connection, or
establishing a secure connection between the wireless network access device (218) and the first client device (208), wherein the stored online content is requested from the wireless network access device (218) and returned to the first client device (208) via the secure connection.

7. The wireless network access device (218) of claim 1, wherein the online content is encrypted by the content server (240) and decryptable by the first client device (208) based on a key unknown to the wireless network access device (218).

8. A non-transitory, computer-readable medium encoded with executable instructions that, when executed by one or more processors, cause a wireless network access device for a wireless local area network (104) to perform operations comprising:
establishing (418) a wireless link between the wireless network access device (218) and a first wireless client device (208) based on authentication by an authentication server (240) of credentials of a first user account received from the first wireless client device (208), wherein the first user account is signed in on the first wireless client device (208);
receiving (446) a plurality of pre-cache notifications, associated with a plurality of user accounts, for online content anticipated to be requested by a plurality of wireless client devices, wherein the plurality of wireless client devices are associated with a plurality of respective user accounts, and wherein the plurality of wireless client devices includes the first wireless client device and the plurality of user accounts includes the first user account;
prioritizing the plurality of received pre-cache notifications associated with user accounts of owners of the wireless network;
requesting (448), based on the prioritization of the plurality of pre-cache notifications, the online content, from a content server (240), for pre-cache notifications associated to the first user account and associating the online content with the first user account;
receiving (456) the requested online content from the content server (240) and storing (456) the requested online content in a partition of cache memory assigned to the first user account;
receiving (472) a request for the online content from the first wireless client device (208) linked to the wireless network access device (218) via the wireless link; and
returning (476) the online content from the partition of cache memory to the first wireless client device (218) when the online content matches the request and the online content is associated with the first user account.

9. The non-transitory, computer-readable medium of claim 8, wherein the operations further comprise:
establishing a secure connection between the wireless network access device (218) and the content server (240), wherein the online content is requested and received from the content server (240) via the secure connection, or
establishing a secure connection between the wireless network access device (218) and the first wireless client device (208), wherein the stored online content is requested from the wireless network access device (218) and sent to the first wireless client device (208) via the secure connection.

10. The non-transitory, computer-readable medium of claim 8, wherein the online content is encrypted by the content server (240) and decryptable by the first wireless client device (208) based on a key unknown to the wireless network access device (218).

11. The non-transitory, computer-readable medium of claim 8, wherein the operations further comprise clearing the partition of cache memory assigned to the first user account in response to the first wireless client device (208) disconnecting from the wireless network access device (218).

12. A computer-implemented method at a wireless network access device for pre-caching online content, the method comprising:
establishing a wireless link between the wireless network access device for a wireless local area network and a first wireless client device based on authentication by an authentication server of credentials of a first user account received from the first wireless client device, wherein the first user account is signed in on the first wireless client device;
receiving, at the wireless network access device, a plurality of pre-cache notifications, associated with a plurality of user accounts, from a content server for online content anticipated to be requested by a plurality of wireless client devices prior to receiving a request for the online content from the first wireless client device, wherein the plurality of client devices are associated with a plurality of respective user accounts, and wherein the plurality of wireless client devices includes the first wireless client device and the plurality of user accounts includes the first user account;
prioritizing the plurality of received pre-cache notifications associated with user accounts of owners of the wireless network;
requesting, based on the prioritization of the plurality of pre-cache notifications, online content, from the content server, for pre-cache notifications associated to the first user account and associating the online content with the first user account ;
receiving the requested online content from the content server and storing the received online content in a cache memory in the wireless network access device;
receiving a request for the online content from the first wireless client device; and
returning the online content from the cache memory to the first wireless client device when the online content matches the request and is associated with the first user account.

13. The computer-implemented method of claim 12, further comprising:
establishing a first secure connection between the wireless network access device and the content server,
wherein the online content is requested and received from the content server via the first secure connection; and
establishing a second secure connection between the wireless network access device and the first wireless client device,
wherein the online content is requested from the wireless network access device and sent to the first wireless client device via the second secure connection

14. The computer-implemented method of claim 13, wherein the online content is encrypted by the content server and decryptable by the first wireless client device based on a key unknown to the wireless network access device.

## Patentansprüche

1. Drahtlosnetzwerk-Zugriffsgerät (218) für ein drahtloses lokales Netzwerk (104), umfassend:
einen Zwischenspeicher;
einen oder mehrere Prozessoren; und
ein nichtflüchtiges, maschinenlesbares Medium, das mit Anweisungen codiert ist, die, bei Ausführung durch den einen oder die mehreren Prozessoren, den einen oder die mehreren Prozessoren veranlassen, Operationen durchzuführen, umfassend:
Einrichten (418) einer drahtlosen Verbindung zwischen dem Drahtlosnetzwerk-Zugriffsgerät (218) und einem ersten Client-Gerät (208) basierend auf einer Authentifizierung, durch einen Authentifizierungsserver (240), von Anmeldeinformationen eines ersten Benutzerkontos, die von dem ersten Client-Gerät (208) empfangen werden, wobei das erste Benutzerkonto auf dem ersten Client-Gerät (208) angemeldet ist;
Empfangen (446) einer Vielzahl von Vorspeicherbenachrichtigungen, die mit einer Vielzahl von Benutzerkonten assoziiert sind, für Online-Inhalte, für die erwartet wird, dass sie durch eine Vielzahl von Client-Geräten angefordert werden, wobei die Vielzahl von Client-Geräten mit einer Vielzahl von jeweiligen Benutzerkonten assoziiert sind, und wobei die Vielzahl von Client-Geräten das erste Client-Gerät beinhaltet und die Vielzahl von Benutzerkonten das erste Benutzerkonto beinhaltet;
Priorisieren der Vielzahl von empfangenen Vorspeicherbenachrichtigungen, die mit Benutzerkonten von Eigentümern des drahtlosen Netzwerks assoziiert sind;
Anfordern (448), basierend auf der Priorisierung der Vielzahl von Vorspeicherbenachrichtigungen, der Online-Inhalte von einem Inhaltsserver (240) für Vorspeicherbenachrichtigungen, die mit dem ersten Benutzerkonto assoziiert sind, und Assoziieren der Online-Inhalte mit dem ersten Benutzerkonto;
Empfangen (456) der angeforderten Online-Inhalte von dem Inhaltsserver (240) und Speichern (456) der angeforderten Online-Inhalte in dem Zwischenspeicher;
Empfangen (472) einer Anforderung für die Online-Inhalte von dem ersten Client-Gerät (208), das mit dem Drahtlosnetzwerk-Zugriffsgerät (218) verbunden ist; und
Zurückgeben (476) der Online-Inhalte aus dem Zwischenspeicher an das erste Client-Gerät (208), wenn die Online-Inhalte mit der Anforderung übereinstimmen und die Online-Inhalte mit dem ersten Benutzerkonto assoziiert sind.

2. Drahtlosnetzwerk-Zugriffsgerät (218) nach Anspruch 1, wobei das erste Client-Gerät (208) ein drahtloses Client-Gerät ist, das mit dem Drahtlosnetzwerk-Zugriffsgerät über die drahtlose Verbindung verbunden ist.

3. Drahtlosnetzwerk-Zugriffsgerät (218) nach Anspruch 1, wobei die Vorspeicherbenachrichtigung ausgehend von dem Inhaltsserver (240), einem mit dem ersten Benutzerkonto assoziierten cloudbasierten Dienst oder einer Client-Anwendung auf dem ersten Client-Gerät (208) empfangen wird.

4. Drahtlosnetzwerk-Zugriffsgerät (218) nach Anspruch 1, wobei der Zwischenspeicher in eine Vielzahl von Partitionen unterteilt ist,
wobei die angeforderten Online-Inhalte in einer Partition der Vielzahl von Partitionen in dem Zwischenspeicher gespeichert werden, die dem ersten Benutzerkonto zugeordnet ist, und
wobei die Operationen ferner ein Löschen der Partition des Zwischenspeichers, die mit dem ersten Benutzerkonto assoziiert ist, in Reaktion auf ein Trennen der Verbindung zu dem Drahtlosnetzwerk-Zugriffsgerät (218) durch das erste Client-Gerät (208) umfassen.

5. Drahtlosnetzwerk-Zugriffsgerät (218) nach Anspruch 1, wobei die Vorspeicherbenachrichtigung eine Kennung für die erwarteten Online-Inhalte und einen Ort der erwarteten Online-Inhalte auf dem Inhaltsserver (240) umfasst.

6. Drahtlosnetzwerk-Zugriffsgerät (218) nach Anspruch 1, wobei die Operationen ferner umfassen:
Einrichten einer sicheren Verbindung zwischen dem Drahtlosnetzwerk-Zugriffsgerät (218) und dem Inhaltsserver (240), wobei die Online-Inhalte über die sichere Verbindung angefordert und von dem Inhaltsserver (240) empfangen werden, oder
Einrichten einer sicheren Verbindung zwischen dem Drahtlosnetzwerk-Zugriffsgerät (218) und dem ersten Client-Gerät (208), wobei die gespeicherten Online-Inhalte über die sichere Verbindung von dem Drahtlosnetzwerk-Zugriffsgerät (218) angefordert werden und an das erste Client-Gerät (208) zurückgegeben werden.

7. Drahtlosnetzwerk-Zugriffsgerät (218) nach Anspruch 1, wobei die Online-Inhalte basierend auf einem Schlüssel, der dem Drahtlosnetzwerk-Zugriffsgerät (218) nicht bekannt ist, durch den Inhaltsserver (240) verschlüsselt werden und durch das erste Client-Gerät (208) entschlüsselt werden können.

8. Nichtflüchtiges, computerlesbares Medium, das mit ausführbaren Anweisungen codiert ist, die, bei Ausführung durch einen oder mehrere Prozessoren, ein Drahtlosnetzwerk-Zugriffsgerät für ein drahtloses lokales Netzwerk (104) veranlassen, Operationen durchzuführen, umfassend:
Einrichten (418) einer drahtlosen Verbindung zwischen dem Drahtlosnetzwerk-Zugriffsgerät (218) und einem ersten drahtlosen Client-Gerät (208) basierend auf einer Authentifizierung, durch einen Authentifizierungsserver (240), von Anmeldeinformationen eines ersten Benutzerkontos, die von dem ersten Client-Gerät (208) empfangen werden, wobei das erste Benutzerkonto auf dem ersten Client-Gerät (208) angemeldet ist;
Empfangen (446) einer Vielzahl von Vorspeicherbenachrichtigungen, die mit einer Vielzahl von Benutzerkonten assoziiert sind, für Online-Inhalte, für die erwartet wird, dass sie durch eine Vielzahl von drahtlosen Client-Geräten angefordert werden, wobei die Vielzahl von drahtlosen Client-Geräten mit einer Vielzahl von jeweiligen Benutzerkonten assoziiert sind, und wobei die Vielzahl von drahtlosen Client-Geräten das erste drahtlose Client-Gerät beinhaltet und die Vielzahl von Benutzerkonten das erste Benutzerkonto beinhaltet;
Priorisieren der Vielzahl von empfangenen Vorspeicherbenachrichtigungen, die mit Benutzerkonten von Eigentümern des drahtlosen Netzwerks assoziiert sind;
Anfordern (448), basierend auf der Priorisierung der Vielzahl von Vorspeicherbenachrichtigungen, der Online-Inhalte von einem Inhaltsserver (240) für Vorspeicherbenachrichtigungen, die mit dem ersten Benutzerkonto assoziiert sind, und Assoziieren der Online-Inhalte mit dem ersten Benutzerkonto;
Empfangen (456) der angeforderten Online-Inhalte von dem Inhaltsserver (240) und Speichern (456) der angeforderten Online-Inhalte in einer Zwischenspeicherpartition, die dem ersten Benutzerkonto zugeordnet ist;
Empfangen (472) einer Anforderung für die Online-Inhalte von dem ersten drahtlosen Client-Gerät (208), das mit dem Drahtlosnetzwerk-Zugriffsgerät (218) über die drahtlose Verbindung verbunden ist; und
Zurückgeben (476) der Online-Inhalte aus der Zwischenspeicherpartition an das erste drahtlose Client-Gerät (218), wenn die Online-Inhalte mit der Anforderung übereinstimmen und die Online-Inhalte mit dem ersten Benutzerkonto assoziiert sind.

9. Nichtflüchtiges, computerlesbares Medium nach Anspruch 8, wobei die Operationen ferner Folgendes umfassen:
Einrichten einer sicheren Verbindung zwischen dem Drahtlosnetzwerk-Zugriffsgerät (218) und dem Inhaltsserver (240), wobei die Online-Inhalte über die sichere Verbindung angefordert und von dem Inhaltsserver (240) empfangen werden, oder
Einrichten einer sicheren Verbindung zwischen dem Drahtlosnetzwerk-Zugriffsgerät (218) und dem ersten drahtlosen Client-Gerät (208), wobei die gespeicherten Online-Inhalte über die sichere Verbindung von dem Drahtlosnetzwerk-Zugriffsgerät (218) angefordert werden und an das erste drahtlose Client-Gerät (208) gesendet werden.

10. Nichtflüchtiges, computerlesbares Medium nach Anspruch 8, wobei die Online-Inhalte basierend auf einem Schlüssel, der dem Drahtlosnetzwerk-Zugriffsgerät (218) nicht bekannt ist, durch den Inhaltsserver (240) verschlüsselt werden und durch das erste Client-Gerät (208) entschlüsselt werden können.

11. Nichtflüchtiges, computerlesbares Medium nach Anspruch 8, wobei die Operationen ferner ein Löschen der Zwischenspeicherpartition, die dem ersten Benutzerkonto zugeordnet ist, in Reaktion auf ein Trennen der Verbindung zu dem Drahtlosnetzwerk-Zugriffsgerät (218) durch das erste drahtlose Client-Gerät (208) umfassen.

12. Computerimplementiertes Verfahren an einem Drahtlosnetzwerk-Zugriffsgerät zum Vorspeichern von Online-Inhalten, wobei das Verfahren umfasst:
Einrichten einer drahtlosen Verbindung zwischen dem Drahtlosnetzwerk-Zugriffsgerät für ein drahtloses lokales Netzwerk und einem ersten drahtlosen Client-Gerät basierend auf einer Authentifizierung, durch einen Authentifizierungsserver, von Anmeldeinformationen eines ersten Benutzerkontos, die von dem ersten Client-Gerät empfangen werden, wobei das erste Benutzerkonto auf dem ersten Client-Gerät angemeldet ist;
Empfangen, an dem Drahtlosnetzwerk-Zugriffsgerät, einer Vielzahl von Vorspeicherbenachrichtigungen, die mit einer Vielzahl von Benutzerkonten assoziiert sind, von einem Inhaltsserver für Online-Inhalte, für die erwartet wird, dass sie durch eine Vielzahl von drahtlosen Client-Geräten angefordert werden, vor einem Empfangen einer Anforderung für die Online-Inhalte von dem ersten drahtlosen Client-Gerät, wobei die Vielzahl von Client-Geräten mit einer Vielzahl von jeweiligen Benutzerkonten assoziiert sind, und wobei die Vielzahl von drahtlosen Client-Geräten das erste drahtlose Client-Gerät beinhaltet und die Vielzahl von Benutzerkonten das erste Benutzerkonto beinhaltet;
Priorisieren der Vielzahl von empfangenen Vorspeicherbenachrichtigungen, die mit Benutzerkonten von Eigentümern des drahtlosen Netzwerks assoziiert ist;
Anfordern, basierend auf der Priorisierung der Vielzahl von Vorspeicherbenachrichtigungen, von Online-Inhalten von dem Inhaltsserver für Vorspeicherbenachrichtigungen, die mit dem ersten Benutzerkonto assoziiert sind, und Assoziieren der Online-Inhalte mit dem ersten Benutzerkonto;
Empfangen der angeforderten Online-Inhalte von dem Inhaltsserver und Speichern der empfangenen Online-Inhalte in einem Zwischenspeicher in dem Drahtlosnetzwerk-Zugriffsgerät;
Empfangen einer Anforderung für die Online-Inhalte von dem ersten drahtlosen Client-Gerät; und
Zurückgeben der Online-Inhalte aus dem Zwischenspeicher an das erste drahtlose Client-Gerät, wenn die Online-Inhalte mit der Anforderung übereinstimmen und mit dem ersten Benutzerkonto assoziiert sind.

13. Computerimplementiertes Verfahren nach Anspruch 12, ferner umfassend:
Einrichten einer ersten sicheren Verbindung zwischen dem Drahtlosnetzwerk-Zugriffsgerät und dem Inhaltsserver,
wobei die Online-Inhalte über die erste sichere Verbindung angefordert und von dem Inhaltsserver empfangen werden; und
Einrichten einer zweiten sicheren Verbindung zwischen dem Drahtlosnetzwerk-Zugriffsgerät und dem ersten drahtlosen Client-Gerät,
wobei die Online-Inhalte über die zweite sichere Verbindung vom Drahtlosnetzwerk-Zugriffsgerät angefordert und an das erste drahtlose Client-Gerät gesendet werden.

14. Computerimplementiertes Verfahren nach Anspruch 13, wobei die Online-Inhalte basierend auf einem Schlüssel, der dem Drahtlosnetzwerk-Zugriffsgerät nicht bekannt ist, durch den Inhaltsserver verschlüsselt werden und durch das erste Client-Gerät entschlüsselt werden können.

## Revendications

1. Dispositif d'accès réseau sans fil (218) pour un réseau local sans fil (104), comprenant :
une mémoire cache ;
un ou plusieurs processeurs ; et
un support lisible par machine, non-transitoire, encodé avec des instructions qui, lorsqu'elles sont exécutées par le ou les processeurs, amènent le ou les processeurs à effectuer des opérations comprenant :
l'établissement (418) d'un lien sans fil entre le dispositif d'accès réseau sans fil (218) et un premier dispositif client (208) sur base de l'authentification par un serveur d'authentification (240) des informations d'identification d'un premier compte utilisateur reçu à partir du premier dispositif client (208), dans lequel le premier compte utilisateur est connecté sur le premier dispositif client (208) ;
la réception (446) d'une pluralité de notifications pré-cache, associées à une pluralité de comptes utilisateur, pour un contenu en ligne anticipé devant être demandé par une pluralité de dispositifs client, dans lequel la pluralité de dispositifs client est associée à une pluralité de comptes utilisateur respectifs, et dans lequel la pluralité de dispositifs client comprend le premier dispositif client et la pluralité de comptes utilisateur comprend le premier compte utilisateur ;
la priorisation de la pluralité de notifications pré-cache reçues associées aux comptes utilisateur de propriétaires du réseau sans fil ;
la demande (448), sur base de la priorisation de la pluralité de notifications pré-cache, du contenu en ligne, à partir d'un serveur de contenu (240), pour des notifications pré-cache associées au premier compte utilisateur et l'association du contenu en ligne avec le premier compte utilisateur ;
la réception (456) du contenu en ligne demandé à partir du serveur de contenu (240) et le stockage (456) du contenu en ligne demandé dans la mémoire cache ;
la réception (472) d'une demande pour le contenu en ligne à partir du premier dispositif client (208) lié au dispositif d'accès réseau sans fil (218) ; et
le renvoi (476) du contenu en ligne à partir de la mémoire cache au premier dispositif client (208) lorsque le contenu en ligne correspond à la demande et que le contenu en ligne est associé au premier compte utilisateur.

2. Dispositif d'accès réseau sans fil (218) selon la revendication 1, dans lequel le premier dispositif client (208) est un dispositif client sans fil lié au dispositif d'accès réseau sans fil via le lien sans fil.

3. Dispositif d'accès réseau sans fil (218) selon la revendication 1, dans lequel la notification pré-cache est reçue à partir du serveur de contenu (240), un service basé en nuage associé au premier compte utilisateur, ou une application client sur le premier dispositif client (208).

4. Dispositif d'accès réseau sans fil (218) selon la revendication 1, dans lequel la mémoire cache est divisée en une pluralité de partitions,
dans lequel le contenu en ligne demandé est stocké dans une partition de la pluralité de partitions dans la mémoire cache attribuée au premier compte utilisateur, et
dans lequel les opérations comprennent en outre la suppression de la partition de la mémoire cache attribuée au premier compte utilisateur en réponse à la déconnexion du premier dispositif client (208) du dispositif d'accès réseau sans fil (218).

5. Dispositif d'accès réseau sans fil (218) selon la revendication 1, dans lequel la notification pré-cache comprend un identifiant pour le contenu en ligne anticipé et un emplacement du contenu en ligne anticipé sur le serveur de contenu (240).

6. Dispositif d'accès réseau sans fil (218) selon la revendication 1, dans lequel les opérations comprennent en outre
la mise en place d'une connexion sécurisée entre le dispositif d'accès réseau (218) et le serveur de contenu (240), dans lequel le contenu en ligne est demandé et reçu à partir du serveur de contenu (240) via la connexion sécurisée, ou
la mise en place d'une connexion sécurisée entre le dispositif d'accès réseau sans fil (218) et le premier dispositif client (208), dans lequel le contenu en ligne stocké est demandé à partir du dispositif d'accès réseau sans fil (218) et renvoyé au premier dispositif client (208) via la connexion sécurisée.

7. Dispositif d'accès réseau sans fil (218) selon la revendication 1, dans lequel le contenu en ligne est crypté par le serveur de contenu (240) et décryptable par le premier dispositif client (208) sur base d'une clé inconnue du dispositif d'accès réseau sans fil (218).

8. Support lisible par ordinateur, non transitoire encodé avec des instructions exécutables qui, lorsqu'elles sont exécutées par un ou plusieurs processeurs, amènent un dispositif d'accès réseau sans fil pour un réseau local sans fil (104) à réaliser des opérations comprenant :
l'établissement (418) d'un lien sans fil entre le dispositif d'accès réseau sans fil (218) et un premier dispositif client (208) sur base de l'authentification par un serveur d'authentification (240) d'informations d'identification d'un premier compte utilisateur reçu à partir du premier dispositif client (208), dans lequel le premier compte utilisateur est connecté sur le premier dispositif client (208) ;
la réception (446) d'une pluralité de notifications pré-cache, associées à une pluralité de comptes utilisateur, pour un contenu en ligne anticipé devant être demandé par une pluralité de dispositifs client, dans lequel la pluralité de dispositifs client sans fil est associée à une pluralité de comptes utilisateur respectifs, et dans lequel la pluralité de dispositifs client sans fil comprend le premier dispositif client sans fil et la pluralité de comptes utilisateur comprend le premier compte utilisateur ;
la priorisation de la pluralité de notifications pré-cache reçues associées aux comptes utilisateur de propriétaires du réseau sans fil ;
la demande (448), sur base de la priorisation de la pluralité de notifications pré-cache, du contenu en ligne, à partir d'un serveur de contenu (240), pour des notifications pré-cache associées au premier compte utilisateur et l'association du contenu en ligne avec le premier compte utilisateur ;
la réception (456) du contenu en ligne demandé à partir du serveur de contenu (240) et le stockage (456) du contenu en ligne demandé dans une partition de mémoire cache attribuée au premier compte utilisateur ;
la réception (472) d'une demande pour le contenu en ligne à partir du premier dispositif client (208) lié au dispositif d'accès réseau sans fil (218) via le lien sans fil ; et
le renvoi (476) du contenu en ligne à partir de la partition de la mémoire cache au premier dispositif client sans fil (218) lorsque le contenu en ligne correspond à la demande et que le contenu en ligne est associé au premier compte utilisateur.

9. Support lisible par ordinateur, non transitoire, selon la revendication 8, dans lequel les opérations comprennent en outre :
la mise en place d'une connexion sécurisée entre le dispositif d'accès réseau sans fil (218) et le serveur de contenu (240), dans lequel le contenu en ligne est demandé et reçu à partir du serveur de contenu (240) via la connexion sécurisée, ou
la mise en place d'une connexion sécurisée entre le dispositif d'accès réseau sans fil (218) et le premier dispositif client sans fil (208), dans lequel le contenu en ligne stocké est demandé à partir du dispositif d'accès réseau sans fil (218) et envoyé au premier dispositif client sans fil (208) via la connexion sécurisée.

10. Support lisible par ordinateur, non transitoire, selon la revendication 8, dans lequel le contenu en ligne est crypté par le serveur de contenu (240) et décryptable par le premier dispositif client sans fil (208) sur base d'une clé inconnue du dispositif d'accès réseau sans fil (218).

11. Support lisible par ordinateur, non transitoire, selon la revendication 8, dans lequel les opérations comprennent en outre la suppression de la partition de mémoire cache attribuée au premier compte utilisateur en réponse à la déconnexion du premier dispositif client (208) du dispositif d'accès réseau sans fil (218) .

12. Procédé mis en œuvre par ordinateur sur un dispositif d'accès réseau sans fil pour un contenu en ligne pré-mise en cache, le procédé comprenant :
l'établissement d'un lien sans fil entre le dispositif d'accès réseau sans fil pour un réseau local sans fil et un premier dispositif client sans fil sur base de l'authentification par un serveur d'authentification des informations d'identification d'un premier compte utilisateur reçu à partir du premier dispositif client sans fil, dans lequel le premier compte utilisateur est connecté sur le premier dispositif client sans fil ;
la réception, sur le dispositif d'accès réseau sans fil, d'une pluralité de notifications pré-cache, associées à une pluralité de comptes utilisateur, à partir d'un serveur de contenu pour un contenu en ligne anticipé devant être demandé par une pluralité de dispositifs client sans fil avant la réception d'une demande pour le contenu en ligne à partir du premier dispositif client sans fil, , dans lequel la pluralité de dispositifs client est associée à une pluralité de comptes utilisateur respectifs, et dans lequel la pluralité de dispositifs client sans fil comprend le premier dispositif client sans fil et la pluralité de comptes utilisateur comprend le premier compte utilisateur ;
la priorisation de la pluralité de notifications pré-cache reçues associées aux comptes utilisateur de propriétaires du réseau sans fil ;
la demande, sur base de la priorisation de la pluralité de notifications pré-cache, de contenu en ligne, à partir d'un serveur de contenu, pour des notifications pré-cache associées au premier compte utilisateur et l'association du contenu en ligne avec le premier compte utilisateur ;
la réception du contenu en ligne demandé à partir du serveur de contenu et le stockage du contenu en ligne reçu dans une mémoire cache dans le dispositif d'accès réseau sans fil ;
la réception d'une demande pour le contenu en ligne à partir du premier dispositif client sans fil ; et
le renvoi du contenu en ligne à partir de la mémoire cache vers le premier dispositif client sans fil lorsque le contenu en ligne correspond à la demande et est associé au premier compte utilisateur.

13. Procédé mis en œuvre par ordinateur selon la revendication 12, comprenant en outre :
la mise en place d'une première connexion sécurisée entre le dispositif d'accès réseau sans fil et le serveur de contenu,
dans lequel le contenu en ligne est demandé et reçu à partir du serveur de contenu via la première connexion sécurisée ; et.
la mise en place d'une deuxième connexion sécurisée entre le dispositif d'accès réseau sans fil et le premier dispositif client sans fil,
dans lequel le contenu en ligne est demandé à partir du dispositif d'accès réseau sans fil et envoyé au premier dispositif client sans fil via la deuxième connexion sécurisée

14. Procédé mis en œuvre par ordinateur selon la revendication 13, dans lequel le contenu en ligne est crypté par le serveur de contenu et décryptable par le premier dispositif client sans fil sur base d'une clé inconnue du dispositif d'accès réseau sans fil.
